# EUROPEAN PATENT APPLICATION

(11) **EP 4 668 374 A1**
(43) Date of publication of application: **24.12.2025**
(21) Application number: 24757078.1
(22) Date of filing: 31.01.2024
(51) Int. Cl.: H01M 4/86, H01M 4/88, H01M 4/92, H01M 4/90, H01M 8/1004, H01M 8/10

(54) **ELECTRODE FOR FUEL CELL, MEMBRANE-ELECTRODE ASSEMBLY, AND MANUFACTURING METHOD THEREFOR**

(30) Priority: 15.02.2023 KR 20230020365
(71) Applicant: Kolon Industries, Inc., Seoul 07793 (KR)
(72) Inventor: KONG, Nak Won, Seoul 07793 (KR); KIM, Jun Young, Seoul 07793 (KR); KIM, Jung Ho, Seoul 07793 (KR); SONG, Kah Young, Seoul 07793 (KR); LEE, Ju Sung, Seoul 07793 (KR)
(74) Representative: Vossius & Partner Patentanwälte Rechtsanwälte mbB
(86) International application number: PCT/KR2024/001448
(87) International publication number: WO 2024/172348

(57) **Abstract**

The present disclosure relates to an electrode for a fuel cell, a membrane-electrode assembly including the same, and a manufacturing method therefor. More specifically, the electrode for a fuel cell of the present disclosure, particularly, a fuel electrode, separates a water electrolysis catalyst from an electrode catalyst, and has gradients in hydrophobicity and absorbency in a catalyst layer, allowing water to move easily into a water electrolysis catalyst layer, thereby greatly improving reverse-voltage resistance while maintaining the same output performance as the related art.

## Description

### Technical Field

The present disclosure relates to an electrode for a fuel cell, a membrane-electrode assembly, and a method for manufacturing the same.

### Background Art

A fuel cell is a power generation system that converts chemical reaction energy of hydrogen and oxygen included in a hydrocarbon-based material such as methanol, ethanol or natural gas directly into electrical energy. A representative example of such a fuel cell is a polymer electrolyte membrane fuel cell (PEMFC). The polymer electrolyte membrane fuel cells are receiving attention as portable, vehicle and home power supplies due to advantages such as a low operating temperature of lower than 100°C, fast start and response properties, and excellent durability.

A membrane-electrode assembly (MEA) that actually generates electricity in the fuel cell system has a structure in which an anode electrode (referred to as a fuel electrode or oxidation electrode) and a cathode electrode (referred to as an air electrode or reduction electrode) are located with an electrolyte membrane in between. The electrolyte is a membrane that is electrically insulating but ion-conducting, and protons produced in the anode are transferred to the cathode after passing through the membrane, and bond with oxygen to produce water.

A fuel cell system experiences a fuel shortage due to various reasons during operation. When water or ice blocks a fuel cell channel or there is a problem in a hydrogen supply system, the fuel electrode is exposed to a reverse-voltage situation as a carbon carrier is oxidized. When the reverse-voltage situation occurs repeatedly, corrosion of the carbon carrier is accelerated, seriously damaging an electrode catalyst.

The reaction occurring in the fuel electrode catalyst layer is a hydrogen oxidation reaction (HOR) shown in the following Equation 1.

2H₂→4H⁺4e⁻ Equation (1)

When hydrogen supply is ceased, an oxidation reaction of carbon shown in the following Equation 2 occurs, and platinum supported on the carbon is lost, degrading the catalyst.

C+H₂→CO₂+4H⁺4e⁻, C+H₂O→CO+2H⁺+2e⁻ Equation (2)

In to resolve this problem, a method of protecting the platinum catalyst by adding a catalyst capable of inducing an oxygen evolution reaction (OER) in the electrode so that the potential at which carbon carrier corrosion is accelerated is not formed is typically used. The OER is shown in the following Equation 3.

2H₂O→O₂+4H⁺+4e⁻ Equation (3)

[1] As an OER or water electrolysis catalyst, IrO₂, RuO₂, TiO₂, IrₓSn₁₋ₓO₂, PtIr, IrRu and the like are generally used. In addition, [2] a method of placing an OER catalyst between a fuel electrode catalyst layer and an electrolyte membrane, or between a gas diffusion layer and a fuel electrode catalyst layer to increase durability is proposed.

However, when an OER or water electrolysis catalyst is mixed with a platinum catalyst to be included inside as in [1], decline in the hydrogen oxidation reaction that a fuel electrode catalyst needs to undergo is caused. Since a metal such as Ir or Ru is placed around platinum having the highest hydrogen oxidation potential, hydrogen oxidation activity is affected, which results in reduced output performance due to an increase in overvoltage during hydrogen oxidation of the negative electrode. In addition, when the material used is an oxide, electrical conductivity decreases compared to a catalyst layer formed only with carbon, resulting in a decrease in output of the entire cell. In addition, when a catalyst layer formed with an OER or water electrolysis catalyst is separately formed and placed between a catalyst layer and an electrolyte membrane as in [2], the output decreases by increasing transfer resistance of hydrogen protons, which needs to be improved.

### DISCLOSURE

### Technical Problem

The present disclosure is directed to providing an electrode for a fuel cell having greatly improved reverse-voltage resistance without causing an increase in overvoltage or an increase in transfer resistance of hydrogen protons, a membrane-electrode assembly including the same, and a method for manufacturing the same.

### Technical Solution

One embodiment of the present disclosure provides an electrode for a fuel cell, the electrode including: a first catalyst layer containing a water electrolysis catalyst; a second catalyst layer provided on the first catalyst layer; and a third catalyst layer provided on the second catalyst layer and having absorbency.

According to one embodiment of the present disclosure, the water electrolysis catalyst may include at least one type of oxygen evolution reaction catalyst selected from the group consisting of metals selected from the group consisting of Li, Co, Ni, Zn, Fe, Ti, Na, Mn, Cu, Ga, Sn, Cr, W, Ru, Ir, Pt, Au and alloys thereof, oxides of the metals, sulfides of the metals, and carbides of the metals.

According to one embodiment of the present disclosure, the oxygen evolution reaction catalyst may include at least one type selected from the group consisting of IrO₂, RuO₂, TiO₂, IrₓSn₁₋ₓO₂ (herein, x is a number greater than 0 and less than 1), PtIr, and IrRu.

According to one embodiment of the present disclosure, the first catalyst layer may further contain a water-repellent material.

According to one embodiment of the present disclosure, the water-repellent material may include at least one type selected from the group consisting of a water-repellent resin, graphitized carbon, hydrophobicity-treated carbon, and hydrophobic silica.

According to one embodiment of the present disclosure, the water-repellent material may include hydrophobic silica having the surface treated with at least one type selected from the group consisting of methyl, difluoromethyl, ethyl, fluoroethyl, propyl, isopropyl, and 3-fluoropropyl.

According to one embodiment of the present disclosure, a content of the water-repellent material may be 0.05% by weight or greater and 3% by weight or less based on a total weight of the first catalyst layer.

According to one embodiment of the present disclosure, the first catalyst layer may have a surface contact angle of 70° or greater and 160° or less, and the third catalyst layer may have a surface contact angle of 20° or greater and 60° or less.

According to one embodiment of the present disclosure, the first catalyst layer may include a first catalyst and a first ion-conducting polymer, the second catalyst layer may include a second catalyst and a second ion-conducting polymer, the third catalyst layer may include a third catalyst and a third ion-conducting polymer, the first catalyst, the second catalyst and the third catalyst may be the same as or different from each other, and the first ion-conducting polymer, the second ion-conducting polymer and the third ion-conducting polymer may be the same as or different from each other.

According to one embodiment of the present disclosure, the first catalyst, the second catalyst and the third catalyst may each independently include a platinum-based catalyst.

According to one embodiment of the present disclosure, the second catalyst layer may have a larger thickness than the first catalyst layer and the third catalyst layer.

According to one embodiment of the present disclosure, the second catalyst layer may have a thickness of 5 µm or greater and 20 µm or less.

According to one embodiment of the present disclosure, the third catalyst layer may further contain an absorbent material.

According to one embodiment of the present disclosure, the absorbent material may include at least one type selected from the group consisting of a hydrophilic resin, carbon having a hydrophilicity-treated surface, silica having a hydrophilicity-treated surface, carbon having a large surface area, and absorbent silica having a large surface area.

According to one embodiment of the present disclosure, a content of the absorbent material may be 0.05% by weight or greater and 5% by weight or less based on a total weight of the third catalyst layer.

According to one embodiment of the present disclosure, the electrode may be used as a fuel electrode of a fuel cell.

One embodiment of the present disclosure provides a method for manufacturing a membrane-electrode assembly including the electrode, the method including: forming a second catalyst layer on a substrate; forming a third catalyst layer on the second catalyst layer; bonding the third catalyst layer to a polymer electrolyte membrane; removing the substrate; forming a first catalyst layer on the second catalyst layer; and bonding the first catalyst layer to a gas diffusion layer.

One embodiment of the present disclosure provides a membrane-electrode assembly including: a polymer electrolyte membrane; a fuel electrode provided on one surface of the polymer electrolyte membrane; an air electrode provided on the other surface of the polymer electrolyte membrane; and a gas diffusion layer provided on the fuel electrode and the air electrode, wherein the fuel electrode is the electrode, the first catalyst layer of the fuel electrode is adjacent to the gas diffusion layer, and the third catalyst layer is adjacent to the polymer electrolyte membrane.

One embodiment of the present disclosure provides a fuel cell including the membrane-electrode assembly.

### Advantageous Effects

In the present disclosure, a water electrolysis catalyst is separated from an electrode catalyst when forming a fuel electrode structure, and accordingly, a structure that suppresses an increase in overvoltage during hydrogen oxidation and does not affect transfer of hydrogen protons can be formed, and a decrease in output is prevented by suppressing an increase in electrical resistance and an increase in overvoltage during hydrogen oxidation.

In addition, by having gradients in hydrophobicity and absorbency in a catalyst layer, the structure is formed such that water readily moves to a water electrolysis catalyst layer, and as a result, the same membrane-electrode assembly output performance as the membrane-electrode assembly having an existing catalyst layer can be achieved while greatly improving reverse-voltage resistance of an existing fuel electrode catalyst layer.

Effects of the present disclosure are not limited to the above-described effects, and effects not mentioned will be clearly appreciated by those skilled in the art from the present specification and drawings accompanied.

### Brief Description of Drawings

FIG. 1 is a cross-sectional view schematically illustrating a membrane-electrode assembly including an electrode according to one embodiment of the present disclosure.
FIG. 2 is a schematic diagram illustrating an overall configuration of a fuel cell according to one embodiment of the present disclosure.

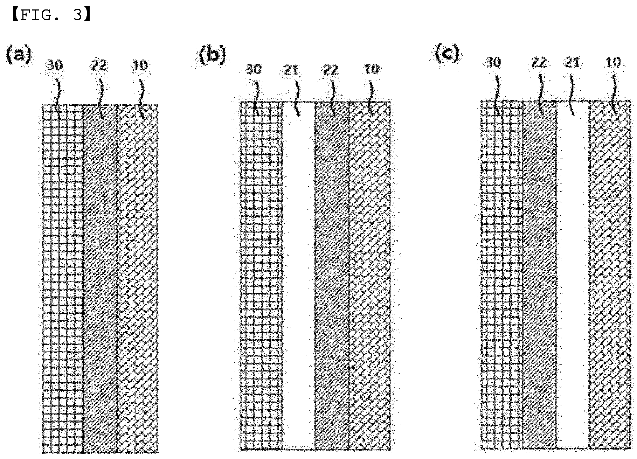

FIG. 3 schematically illustrates membrane-electrode assemblies manufactured in Comparative Examples of the present disclosure, and FIGS. 3(a), (b) and (c) illustrate Comparative Example 1, Comparative Example 2 and Comparative Example 3, respectively.

### Best Mode

Hereinafter, embodiments of the present disclosure will be described in detail with reference to accompanying drawings so that those skilled in the art may readily carry out the present disclosure. However, the present disclosure may be embodied in various different forms and is not limited to the embodiments described herein.

In the drawings, thicknesses are enlarged in order to clearly express various layers and regions, and like reference numerals are used for like parts throughout the specification. When a part such as a layer, membrane, region or plate is referred to as being "above" or "on" another part, this includes not only a case where the part is "directly above" the other part, but also a case where there is still another part in between. On the contrary, when a certain part is referred to as being "directly above" another part, it means that there is not another part in the middle.

Terms such as "include" and "contain" used in the present specification are used to list materials, compositions, devices and methods useful for the present disclosure, and are not limited to the listed examples.

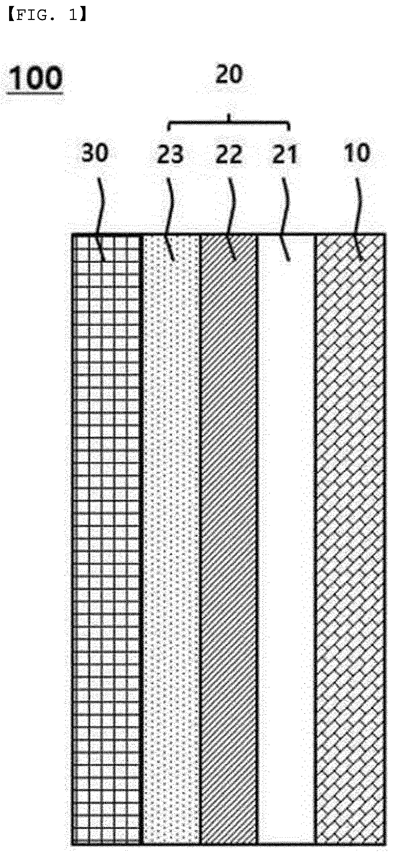

Hereinafter, an electrode for a fuel cell according to one aspect will be described with reference to FIG. 1.

One embodiment of the present disclosure provides an electrode for a fuel cell, the electrode including: a first catalyst layer 21 containing a water electrolysis catalyst; a second catalyst layer 22 provided on the first catalyst layer 21; and a third catalyst layer 23 provided on the second catalyst layer 22 and having absorbency.

According to one embodiment of the present disclosure, the first catalyst layer 21 may include a water electrolysis catalyst (first catalyst). When a fuel shortage occurs in an existing fuel cell, high potential is applied to an electrode, particularly, a fuel electrode (anode). Accordingly, an oxidation reaction of carbon occurs in the fuel electrode, and as a result, a catalyst is oxidized, causing a problem of reducing durability. On the other hand, since one embodiment of the present disclosure uses the first catalyst layer 21, a decomposition reaction of water occurs in the fuel electrode, and as a result, the catalyst is protected, and durability may be further improved.

According to one embodiment of the present disclosure, the water electrolysis catalyst (first catalyst) may include an oxygen evolution reaction (OER) catalyst. Specifically, the oxygen evolution reaction catalyst (OER catalyst) may include at least one type selected from the group consisting of metals selected from the group consisting of Li, Co, Ni, Zn, Fe, Ti, Na, Mn, Cu, Ga, Sn, Cr, W, Ru, Ir, Pt, Au and alloys thereof, oxides of the metals, sulfides of the metals, and carbides of the metals, but is not limited thereto. The OER catalyst may more specifically include metals selected from the group consisting of Ir, Ru, Ti, Sn, Pt and alloys thereof, or oxides of the metals. For example, the OER catalyst may include at least one type selected from the group consisting of IrO₂, RuO₂, TiO₂, IrₓSn₁₋ₓO₂ (herein, x is a number greater than 0 and less than 1), PtIr and IrRu. Herein, the metal oxide may have an average particle diameter of 1 nm or greater and 6 nm or less.

According to one embodiment of the present disclosure, the water electrolysis catalyst may be supported on a conductive carrier. By supporting the water electrolysis catalyst on the carrier, more favorable catalytic activity and stability may be obtained. The conductive carrier of the water electrolysis catalyst may be a carbon-based carrier such as graphite, denka black, ketjen black, acetylene black, carbon nanotube, carbon nanofiber, carbon nanowire or active carbon.

According to one embodiment of the present disclosure, the water electrolysis catalyst (first catalyst) may be used in an amount such that the metal from the water electrolysis catalyst is included in an amount of 0.001 mg/cm² or greater and 0.3 mg/cm² or less, 0.005 mg/cm² or greater and 0.25 mg/cm² or less, 0.01 mg/cm² or greater and 0.2 mg/cm² or less, 0.01 mg/cm² or greater and 0.1 mg/cm² or less, 0.01 mg/cm² or greater and 0.05 mg/cm² or less, 0.001 mg/cm² or greater and 0.01 mg/cm² or less, or 0.005 mg/cm² to 0.1 mg/cm² in the first catalyst layer 21. By employing the amount of the water electrolysis catalyst in the above-mentioned range, reverse-voltage resistance may be improved without declining performance of a fuel cell.

According to one embodiment of the present disclosure, the first catalyst layer 21 may further contain a water-repellent material. In order to decompose water preferentially in the first catalyst layer including the water electrolysis catalyst, intrusion of water needs to be suppressed to a certain extent, and therefore, the first catalyst layer 21 may include a water-repellent material.

According to one embodiment of the present disclosure, the water-repellent material may specifically include at least one type selected form the group consisting of a water-repellent resin, graphitized carbon, hydrophobicity-treated carbon and hydrophobic silica, but is not limited thereto.

As the water-repellent resin, a fluorine-based resin, for example, at least one type selected from the group consisting of polytetrafluoroethylene, polyvinylidene fluoride, polyhexafluoropropylene, polyperfluoroalkyl vinyl ether, polyperfluorosulfonyl fluoride, fluorinated ethylene propylene, polychlorotrifluoroethylene, and copolymers thereof may be used.

According to one embodiment of the present disclosure, the hydrophobicity-treated carbon and the hydrophobic silica may be carbon and silica having the surfaces treated with a hydrophobic functional group. The hydrophobic functional group may include at least one type of functional group selected from the group consisting of an alkyl group, a haloalkyl group, a halo group, an alkenyl group, a phenyl group, an organosilicon group and combinations thereof, but is not limited thereto.

The alkyl group may be a linear or branched alkyl group having 1 to 10 carbon atoms. The halo group may be a chloro group, a fluoro group, a bromo group, an iodo group or the like. The haloalkyl group may be a linear or branched alkyl group having 1 to 10 carbon atoms including one or more halogen atoms, for example, chlorine, fluorine, bromine and the like. The alkenyl group may be a linear or branched alkenyl group having 2 to 10 carbon atoms. The organosilicon group may include at least one type selected from the group consisting of an alkyl group, a haloalkyl group, a halo group, an alkenyl group, a phenyl group and the like. For example, the hydrophobicity-treated carbon or the hydrophobic silica may have the surface treated with at least one type selected from the group consisting of methyl, difluoromethyl, ethyl, fluoroethyl, propyl, isopropyl, 3-fluoropropyl, methylsilyl, dimethylsilyl and trimethylsilyl. When using the surface-treated hydrophobic silica described above as the water-repellent material, reverse-voltage resistance of the electrode may be further improved.

According to one embodiment of the present disclosure, the content of the water-repellent material may be 0.05% by weight or greater and 3% by weight or less, 0.1% by weight or greater and 3% by weight or less, 0.1% by weight or greater and 2% by weight or less, 0.1% by weight or greater and 1% by weight or less, 0.1% by weight or greater and 0.5% by weight or less, 0.5% by weight or greater and 1% by weight or less, 0.4% by weight or greater and 3% by weight or less, or 0.45% by weight or greater and 2% by weight or less based on the total weight of the first catalyst layer. By employing the amount of the water-repellent material in the above-mentioned range, it is possible to maintain an appropriate balance such that intrusion of water is suppressed so that decomposition of water occurs preferentially in the first catalyst layer 21, while, at the same time, preventing a problem of water decomposition not occurring by the first catalyst layer 21 failing to retain water.

According to one embodiment of the present disclosure, the first catalyst layer 21 may contain a catalyst and an ion-conducting polymer included in a catalyst layer of a common fuel cell electrode for a cell reaction. The first catalyst and the first ion-conducting polymer used in the first catalyst layer 21 may be the same as or different from those used in the second catalyst layer 22 and the third catalyst layer 23 described below. The description on the first catalyst and the first ion-conducting polymer refers to description on the second catalyst layer 22 provided below.

According to one embodiment of the present disclosure, since the first catalyst layer 21 further contains the water-repellent material, the first catalyst layer may become a catalyst layer having relatively higher hydrophobicity than the second catalyst layer and the third catalyst layer. However, the first catalyst layer 21 itself does not need to be necessarily hydrophobic since the water-repellent material is included. The first catalyst layer 21 itself may be close to hydrophobic or may become hydrophobic depending on the type and the content of the water-repellent material.

According to one embodiment of the present disclosure, the first catalyst layer 21 may have a surface contact angle of 70° or greater and 160° or less, 70° or greater and 140° or less, 70° or greater and 120° or less, 70° or greater and 110° or less, 70° or greater and 100° or less, or 95° or greater and 110° or less. The contact angle is a water contact angle at room temperature, and, after dropping a water drop on a substrate such as the first catalyst layer, is measured at the end point of the water drop curve and the contact point of the substrate surface through an image analysis. The surface having a surface contact angle of 90° or greater is referred to as a hydrophobic surface, and the surface having a surface contact angle of less than 90° is referred to as a hydrophilic surface.

According to one embodiment of the present disclosure, the first catalyst layer 21 may have a thickness of 0.1 µm or greater and 5 µm or less, 0.5 µm or greater and 3 µm or less, 1 µm or greater and 2 µm or less, 0.5 µm or greater and 2 µm or less, or 3 µm or greater and 5 µm or less. By employing the thickness in the above-mentioned range, reverse-voltage resistance may be improved without declining performance of a fuel cell.

According to one embodiment of the present disclosure, the second catalyst layer 22 may be commonly used in a catalyst layer of a fuel cell electrode. The second catalyst layer 22 may contain a second catalyst and a second ion-conducting polymer. The second catalyst may be the same as or different from the first catalyst or the following third catalyst. The second ion-conducting polymer may be the same as or different from the first ion-conducting polymer or the following third ion-conducting polymer.

According to one embodiment of the present disclosure, any catalyst that participates in a reaction of a cell and may be used as a catalyst of a common fuel cell may be used as the second catalyst. Preferably, a platinum-based metal may be used.

According to one embodiment of the present disclosure, the platinum-based metal may include one selected from the group consisting of platinum (Pt), palladium (Pd), ruthenium (Ru), iridium (Ir), osmium (Os), platinum-M alloys (M is at least one selected from the group consisting of palladium (Pd), ruthenium (Ru), iridium (Ir), osmium (Os), gallium (Ga), titanium (Ti), vanadium (V), chromium (Cr), manganese (Mn), iron (Fe), cobalt (Co), nickel (Ni), copper (Cu), silver (Ag), gold (Au), zinc (Zn), tin (Sn), molybdenum (Mo), tungsten (W), lanthanum (La) and rhodium (Rh)), non-platinum alloys and combinations thereof, and more preferably, a combination of two or more metals selected from the group consisting of the platinum-based catalyst metal group may be used. However, the platinum-based metal is not limited thereto, and any platinum-based catalyst metals that may be used in the related art may be used without limit.

Specifically, the platinum alloy may be selected from the group consisting of Pt-Pd, Pt-Sn, Pt-Mo, Pt-Cr, Pt-W, Pt-Ru, Pt-Ru-W, Pt-Ru-Mo, Pt-Ru-Rh-Ni, Pt-Ru-Sn-W, Pt-Co, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr, Pt-Cr-Ir and combinations thereof, and may be used either alone or as a mixture of two or more thereof.

In addition, the non-platinum alloy may be selected from the group consisting of Ir-Fe, Ir-Ru, Ir-Os, Co-Fe, Co-Ru, Co-Os, Rh-Fe, Rh-Ru, Rh-Os, Ir-Ru-Fe, Ir-Ru-Os, Rh-Ru-Fe, Rh-Ru-Os and combinations thereof, and may be used either alone or as a mixture of two or more thereof.

Such a catalyst may be used as a catalyst itself (black), or may be supported on a carrier to be used.

According to one embodiment of the present disclosure, the carrier may be selected from among carbon-based carriers, porous inorganic oxides such as zirconia, alumina, titania, silica and ceria, zeolite, and the like. The carbon-based carrier may be selected from among graphite, super P, carbon fiber, carbon sheet, carbon black, ketjen black, denka black, acetylene black, carbon nanotube (CNT), carbon sphere, carbon ribbon, fullerene, active carbon, carbon nanofiber, carbon nanowire, carbon nanoball, carbon nanohorn, carbon nanocage, carbon nanoring, ordered nano-/meso-porous carbon, carbon aerogel, mesoporous carbon, graphene, stabilized carbon, activated carbon and combinations of one or more thereof, but is not limited thereto, and carriers that may be used in the related art may be used without limit.

According to one embodiment of the present disclosure, the catalyst may be placed on the surface of the carrier, or may penetrate into the carrier while filling inner pores of the carrier. When a metal supported on the carrier is used as the catalyst, commercially available products may be used, or it may be prepared by supporting a metal on the carrier and used.

According to one embodiment of the present disclosure, the content of the second catalyst may be 20% by weight or greater and 80% by weight or less based on the total weight of the second catalyst layer. Alternatively, the second catalyst may be used in an amount such that the metal from the second catalyst is included in an amount of 0.05 mg/cm² or greater and 1 mg/cm² or less, for example, 0.1 mg/cm² or greater and 0.8 mg/cm² or less in the second catalyst layer 22. By employing the amount of the catalyst in the above-mentioned range, catalytic activity may be effectively exhibited.

According to one embodiment of the present disclosure, the second ion-conducting polymer is for hydrogen ion transfer, and may also function as a binder. An ion-conducting polymer that may be used as the second ion-conducting polymer may be a cation conductor having at least one cation (proton) exchange group selected from the group consisting of a sulfonic acid group, a carboxyl group, a boronic acid group, a phosphoric acid group, an imide group, a sulfonimide group, a sulfonamide group, a sulfonic acid fluoride group, and combinations thereof.

The ion-conducting polymer may be a fluorine-based cation conductor, a hydrocarbon-based cation conductor, or a mixture thereof. Specifically, the ion-conducting polymer may be a fluorine-based cation conductor having a sulfonic acid group and/or a carboxyl group, a hydrocarbon-based cation conductor having a sulfonic acid group and/or a carboxyl group, or a mixture thereof.

Examples of the fluorine-based cation conductor may include Nafion, Aciplex, Flemion, polyvinylidene fluoride, hexafluoropropylene, trifluoroethylene, polytetrafluoroethylene, or a copolymer thereof.

Examples of the hydrocarbon-based cation conductor may include hydrocarbon-based polymers having the cation exchange group on the side chain, for example, sulfonated polyimide (S-PI), sulfonated polyarylethersulfone (SPAES), sulfonated polyether ether ketone (SPEEK), sulfonated polybenzimidazole (SPBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyethersulfone, sulfonated polyetherketone, sulfonated polyphenylenesulfone, sulfonated polyphenylene sulfide, sulfonated polyphenylene sulfide sulfone, sulfonated polyphenylene sulfide sulfone nitrile, sulfonated polyarylene ether, sulfonated polyarylene ether nitrile, sulfonated polyarylene ether ether nitrile, polyarylene ether sulfone ketone, and the like.

According to one embodiment of the present disclosure, the second catalyst layer 22 may have a larger thickness than the first catalyst layer 21 and the third catalyst layer 23. For example, the second catalyst layer 22 may have a thickness of 5 µm or greater and 20 µm or less. When the thickness of the second catalyst layer is in the above-described range, problems of reducing activity caused by a small reaction area, and increasing resistance due to an increase in the migration distance of ions and electrons may be prevented.

According to one embodiment of the present disclosure, the third catalyst layer 23 is a catalyst layer that is in contact with an electrolyte membrane, and may be a catalyst layer having relatively higher absorbency than the first catalyst layer 21 and the second catalyst layer 22.

Since the first catalyst layer 21 has relatively high water repellency, a structure having gradients in hydrophobicity and absorbency in the catalyst layer from the first catalyst layer 21 to the third catalyst layer 23 may be created. Through such a structure, when water produced in an air electrode flows to a fuel electrode after passing through the electrolyte membrane, moisture is quickly transferred to the first catalyst layer 21 after passing through the second catalyst layer 22 due to the third catalyst layer 23, and in a situation in which fuel is deficient again, catalyst deterioration of the second catalyst layer 22 may be prevented as a water hydrolysis reaction occurs in the first catalyst layer 21.

According to one embodiment of the present disclosure, in order to increase absorbency of the third catalyst layer 23, the third catalyst layer 23 may have a relatively larger ion-conducting polymer content than the first catalyst layer 21 and the second catalyst layer 22. In addition, the third catalyst layer 23 may have a larger supported amount of catalyst particles than the first catalyst layer 21 and the second catalyst layer 22.

According to one embodiment of the present disclosure, the third catalyst layer 23 may contain an absorbent material. The absorbent material may include at least one type selected from the group consisting of a hydrophilic resin, carbon having a hydrophilicity-treated surface, silica having a hydrophilicity-treated surface, carbon having a large surface area, and absorbent silica having a large surface area, but is not limited thereto.

The hydrophilic resin may be a resin including a hydrophilic functional group. The carbon having a hydrophilicity-treated surface and the silica having a hydrophilicity-treated surface may be carbon and silica having the surfaces treated with a hydrophilic functional group. The hydrophilic functional group may include a functional group selected from the group consisting of a hydroxyl group (-OH), a carboxyl group (-COOH), an amine group (-NH₂), a sulfonic acid group (-SO₃H), an ether group (-CO-), a nitrate group (-NO₃), an alkoxy group (-OR, herein, R may be an alkyl group having 1 to 10 carbon atoms) and combinations thereof, but is not limited thereto. Examples of the hydrophilic resin may include polyvinyl alcohol, polyethylene glycol, polyacrylic acid, polyacrylamide, carboxymethyl ether sodium salt, polyvinyl methyl ether, hydroxyethyl ether, methyl hydroxyethyl ether, hydroxyethyl cellulose, carboxymethyl cellulose, glycerol propoxylate, and the like. The carbon and silica having the surfaces treated with a hydrophilic functional group may include carbon having the surface treated with a hydroxyl group, silica having the surface treated with a hydroxyl group, and the like.

The carbon having a large surface area and the absorbent silica having a large surface area may be carbon or silica having a high ability to absorb water or the like with high porosity and large surface area. The silica having a large surface area may be, for example, silica having a BET specific surface area of 200 m²/g or greater, specifically 200 m²/g or greater and 800 m²/g or less, and for example, 300 m²/g or greater and 600 m²/g or less.

According to one embodiment of the present disclosure, the content of the absorbent material may be 0.05% by weight or greater and 5% by weight or less, 0.1% by weight or greater and 4% by weight or less, 0.5% by weight or greater and 3% by weight or less, 0.5% by weight or greater and 1.5% by weight or less, 1.5% by weight or greater and 3% by weight or less, 0.05% by weight or greater and 3% by weight or less, or 1% by weight or greater and 5% by weight or less based on the total weight of the third catalyst layer. When the content of the absorbent material is in the above-described range, water produced in an air electrode may be favorably transferred without affecting cell performance.

According to one embodiment of the present disclosure, the third catalyst layer 23 may contain a catalyst and an ion-conducting polymer that are included in a catalyst layer of a common fuel cell electrode for a cell reaction. The third catalyst and the third ion-conducting polymer used in the third catalyst layer 23 may be the same as or different from those used in the first catalyst layer 21 and the second catalyst layer 22. The description on the third catalyst and the third ion-conducting polymer refers to the description stated above on the second catalyst layer 22.

According to one embodiment of the present disclosure, the third catalyst may be used in an amount such that the metal from the third catalyst is included in an amount of 0.001 mg/cm² or greater and 0.3 mg/cm² or less, 0.005 mg/cm² or greater and 0.25 mg/cm² or less, 0.01 mg/cm² or greater and 0.2 mg/cm² or less, 0.03 mg/cm² or greater and 0.1 mg/cm² or less, 0.03 mg/cm² or greater and 0.05 mg/cm² or less, 0.001 mg/cm² or greater and 0.03 mg/cm² or less, or 0.005 mg/cm² to 0.3 mg/cm² in the third catalyst layer 23. By employing the amount of the third catalyst in the above-mentioned range, reverse-voltage resistance may be improved without declining performance of a fuel cell.

According to one embodiment of the present disclosure, the third catalyst layer 23 may have relatively higher hydrophilicity than the first catalyst layer and the second catalyst layer by containing the absorbent material. According to one embodiment of the present disclosure, the third catalyst layer 23 may have a surface contact angle of 20° or greater and 60° or less, 30° or greater and 60° or less, 30° or greater and 50° or less, or 45° or greater and 60° or less. As described above, the surface having a surface contact angle of 90° or greater is referred to as a hydrophobic surface, and the surface having a surface contact angle of less than 90° is referred to as a hydrophilic surface. The third catalyst layer 23 having a surface contact angle of less than 90° is hydrophilic.

According to one embodiment of the present disclosure, the third catalyst layer 23 may have a thickness of 0.1 µm or greater and 5 µm or less. When the thickness of the third catalyst layer is in the above-described range, reverse-voltage resistance may be favorably improved without declining performance of a fuel cell.

Meanwhile, a membrane-electrode assembly according to the present disclosure may be manufactured using a method commonly known in the art.

One embodiment of the present disclosure provides a method for manufacturing a membrane-electrode assembly including the electrode, the method including: forming a second catalyst layer 22 on a substrate; forming a third catalyst layer 23 on the second catalyst layer 22; bonding the third catalyst layer 23 to a polymer electrolyte membrane 30; removing the substrate; forming a first catalyst layer 21 on the second catalyst layer 22; and bonding the first catalyst layer 21 to a gas diffusion layer 10.

According to one embodiment of the present disclosure, the first catalyst layer, the second catalyst layer or the third catalyst layer may be formed using any method known in the art, for example, electroplating, spray coating, bar coating, inkjet printing, roll-to-roll printing, screen printing or the like, and may be preferably formed by spray coating. Specific manufacturing conditions for manufacturing any of catalyst layers, for example, electroplating condition, spraying pressure, drying temperature, drying time and the like may be appropriately selected by those skilled in the art.

One embodiment of the present disclosure provides a membrane-electrode assembly 100 including: a polymer electrolyte membrane 30; a fuel electrode provided on one surface of the polymer electrolyte membrane 30; an air electrode provided on the other surface of the polymer electrolyte membrane 30; and a gas diffusion layer 10 provided on the fuel electrode and the air electrode, wherein the fuel electrode is the electrode according to the above-described embodiment; the first catalyst layer 21 of the electrode is adjacent to the gas diffusion layer 10, and the third catalyst layer 23 is adjacent to the polymer electrolyte membrane 30.

According to one embodiment of the present disclosure, the gas diffusion layer 10 is disposed between the membrane-electrode assembly and a separation plate of a fuel cell, and any gas diffusion layer used in the related art may be used without limit. For example, the gas diffusion layer 10 may be formed to include a conductive substrate selected from the group consisting of carbon paper, carbon cloth and carbon felt. The gas diffusion layer may be formed to further include a microporous layer that is formed on one surface of the conductive substrate, and the microporous layer may be formed to include a carbon-based material such as carbon black or carbon nanotube and a fluorine-based resin such as polytetrafluoroethylene or polyvinylidene fluoride (PVdF).

In the membrane-electrode assembly 100, an electrode disposed on one surface of the polymer electrolyte membrane 30 to cause an oxidation reaction that produces hydrogen ions and electrons from fuel is referred to as a fuel electrode (anode), and an electrode causing a reduction reaction that produces water from hydrogen ions supplied through the polymer electrolyte membrane 30 and an oxidizing agent of the electrode is referred to as an air electrode (cathode).

Among the fuel electrode and the air electrode, the fuel electrode is preferably the electrode 20 for a fuel cell of the present disclosure described above, however, the electrode 20 for a fuel cell of the present disclosure is not limited thereto, and the air electrode may include the electrode 20 for a fuel cell of the present disclosure.

According to one embodiment of the present disclosure, the fuel electrode may include a first catalyst layer 21 containing a water electrolysis catalyst; a second catalyst layer 22 provided on the first catalyst layer 21; and a third catalyst layer 23 provided on the second catalyst layer 22 and having high absorbency.

According to one embodiment of the present disclosure, the first catalyst layer 21 of the fuel electrode may be adjacent to the gas diffusion layer 10, and the third catalyst layer 23 of the fuel electrode may be adjacent to the polymer electrolyte membrane 30. Herein, the "adjacent" means being placed in the vicinity, and does not exclude an embodiment in which a layer other than the first catalyst layer to the third catalyst layer is present between the adjacent first catalyst layer 21 and gas diffusion layer 10, or an embodiment in which a layer other than the first catalyst layer to the third catalyst layer is present between the adjacent third catalyst layer 23 and polymer electrolyte membrane 30.

According to one embodiment of the present disclosure, the polymer electrolyte membrane 30 is a solid polymer electrolyte, and has a function of ion exchange moving hydrogen ions produced in the fuel electrode to the air electrode. As the polymer electrolyte membrane 30, a hydrocarbon-based polymer electrolyte membrane, a fluorine-based polymer electrolyte membrane, and a mixture or copolymer of one or more thereof may be used.

The hydrocarbon-based polymer electrolyte membrane may include a hydrocarbon-based polymer. The polymer may be selected from among styrene, imide, sulfone, phosphazene, ether ether ketone, ethylene oxide, polyphenylene sulfide, or a homopolymer or copolymer of an aromatic group, and derivatives thereof, and these polymers may be used either alone or in combination. Manufacturing the electrolyte membrane using a hydrocarbon-based polymer requires less manufacturing cost, facilitates manufacture, and achieves high ion conductivity compared to manufacturing the electrolyte membrane using a fluorine-based polymer.

As the suitable hydrocarbon membrane, at least one selected from the group consisting of membranes to which sulfonated polysulfone, sulfonated polyethersulfone, sulfonated polyetherketone, sulfonated polyether ether ketone, sulfonated polyarylene ether ether ketone, sulfonated polyarylene ether sulfone, sulfonated polyarylene ether benzimidazole, and an ion conductor are introduced may be more preferably used.

The fluorine-based polymer electrolyte membrane may be used without particular limit as long as it is a material having mechanical strength enough to form a film as an ion-conducting membrane, and having high electrochemical stability. Specific examples of the fluorine-based polymer electrolyte membrane may include a perfluorosulfonic acid resin, a copolymer of tetrafluoroethylene and fluorovinyl ether. The fluorovinyl ether moiety has a function of conducting hydrogen ions. The copolymer is sold by Dupont under the trade name of Nafion, and is commercially available.

A fuel cell according to one embodiment of the present disclosure includes the membrane-electrode assembly, and may be, for example, a fuel cell using hydrogen gas as fuel.

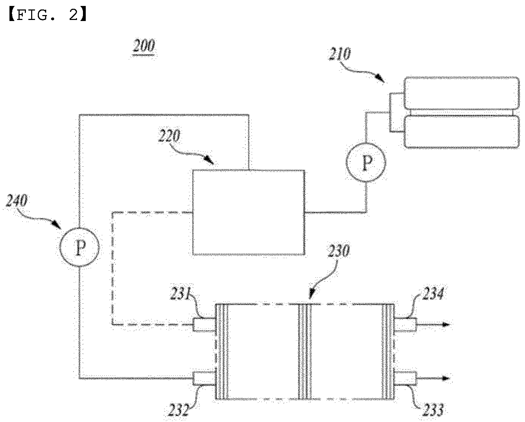

FIG. 2 is a schematic diagram illustrating an overall configuration of the fuel cell according to one embodiment of the present disclosure.

Referring to FIG. 2, the fuel cell 200 may include: a fuel supply unit 210 supplying mixed fuel in which fuel and water are mixed; a reformer 220 generating reformed gas including hydrogen gas by reforming the mixed fuel; a stack 230 in which the reformed gas including hydrogen gas supplied from the reformer 220 causes an electrochemical reaction with an oxidizing agent to generate electrical energy; and an oxidizing agent supply unit 240 supplying the oxidizing agent to the reformer 220 and the stack 230.

The stack 230 may be provided with a plurality of unit cells that generate electrical energy by inducing an oxidation/reduction reaction between the reformed gas including hydrogen gas supplied from the reformer 220 and the oxidizing agent supplied from the oxidizing agent supply unit 240.

Each of the unit cells means a unit cell that generates electricity, and may include the membrane-electrode assembly oxidizing/reducing the reformed gas including hydrogen gas and oxygen in the oxidizing agent, and a separation plate (or also referred to as bipolar plate, and hereinafter, referred to as 'separation plate') for supplying the reformed gas including hydrogen gas and the oxidizing agent to the membrane-electrode assembly. The separation plate may be disposed on both sides of the membrane-electrode assembly with the membrane-electrode assembly at the center. Herein, the separation plate placed at each of the outermost sides of the stack is specifically referred to as an end plate.

Among the separation plates, the end plate is provided with a pipe-shaped first supply pipe 231 for injecting the reformed gas including hydrogen gas supplied from the reformer 220, and a pipe-shaped second supply pipe 232 for injecting oxygen gas, and the other end plate may be provided with a first discharge pipe 233 for discharging the reformed gas including hydrogen gas ultimately unreacted and remaining in the plurality of unit cells to the outside, and a second discharge pipe 234 for discharging the oxidizing agent ultimately unreacted and remaining in the unit cells to the outside.

### Mode for Invention

Hereinafter, specific examples of the present disclosure will be presented. However, examples described below are only for specifically illustrating or describing the present disclosure, and the present disclosure is not limited thereby. In addition, contents not described herein may be sufficiently inferable technically by those skilled in the art, and therefore, the description will not be provided.

### [Comparative Example 1] Fuel Electrode Formed with Second Catalyst Layer Including Platinum-Supported Catalyst

A fuel electrode slurry and an air electrode slurry were prepared according to a common method using a Pt/carbon catalyst.

With an electrode area of 25 cm², the fuel electrode was prepared to have a platinum content of 0.1 mg_{Pt}/cm², and the air electrode was prepared to have a platinum content of 0.4 mg_{Pt}/cm². The electrodes were coated on a release film, and dried for 8 hours in an oven at 60°C.

A commonly used perfluorosulfonic acid-based polymer electrolyte membrane was placed in the middle, the cathode catalyst layer and the anode catalyst layer were laminated on both sides thereof, and a membrane-electrode assembly (MEA) of a fuel cell was completed using a Decal transfer method under a condition of 180°C and 4 MPa.

### [Comparative Example 2] Fuel Electrode Including First Catalyst Layer Adjacent to Polymer Electrolyte Membrane

IrO₂ as a water electrolysis catalyst was dispersed in 1-propanol in an amount of 5% by weight together with a Nafion ion-conducting polymer to prepare a dispersion solution.

The fuel electrode prepared in Comparative Example 1 was placed on a heating plate, and the prepared dispersion solution was pressure sprayed and coated so that the amount of Ir is 0.01 mg/cm². A membrane-electrode assembly of a fuel cell was obtained using a Decal transfer method in the same manner as in Comparative Example 1 in which a perfluorosulfonic acid-based polymer electrolyte membrane was placed in the middle.

### [Comparative Example 3] Fuel Electrode Including First Catalyst Layer Adjacent to Gas Diffusion Layer

The membrane-electrode assembly manufactured in Comparative Example 1 was placed on a heating plate, and the dispersion solution containing the water electrolysis catalyst of Comparative Example 2 was pressure sprayed onto the fuel electrode side and coated so that the amount of Ir is 0.01 mg/cm², and dried. Then, an MEA was obtained using a Decal transfer method.

### [Example 1]

### Example 1-1

Using the same fuel electrode slurry as in Comparative Example 1, a second catalyst layer was coated on a release film in an amount of 0.07 mg/cm², and dried.

For a third catalyst layer, absorbent porous silica having a large specific surface area of 350 m²/g on a Pt/C catalyst was dispersed in water and 1-propanol in an amount of 0.5% by weight to prepare a solution. The dried second catalyst layer was placed on a heating plate, and the prepared solution was pressure sprayed and coated so that the Pt amount is 0.03 mg/cm², and as a result, the third catalyst layer was prepared.

A commonly used perfluorosulfonic acid-based polymer electrolyte membrane was placed in the middle, and a fuel cell MEA was completed using a Decal transfer method under a condition of 180°C and 4 MPa using the prepared fuel electrode catalyst layer and the air electrode catalyst layer of Comparative Example 1 in the same manner.

To prepare a first catalyst layer, a small amount of IrO₂ was added as a water electrolysis catalyst, and dispersed in IPA (isopropyl alcohol) to prepare a solution. MEA was placed on a heating plate, and the prepared solution was pressure sprayed and coated so that the amount of Ir is 0.01 mg/cm².

### Example 1-2

A membrane-electrode assembly (MEA) was manufactured in the same manner as in Example 1-1, except that, when preparing the third catalyst layer, the amount of the absorbent porous silica was adjusted to 1.5% by weight.

### Example 1-3

An electrode and a membrane-electrode assembly (MEA) were manufactured in the same manner as in Example 1-1, except that, when preparing the third catalyst layer, the amount of the absorbent porous silica was adjusted to 3.0% by weight.

### [Example 2]

### Example 2-1

An MEA was manufactured in the same manner as in Example 1, except that, hydrophobic silica having the surface treated with a CH₃ group was added in an amount of 0.1% by weight in addition to the IrO₂ as the water electrolysis catalyst (first catalyst) when preparing the dispersion solution.

### Example 2-2

An MEA was manufactured in the same manner as in Example 2-1, except that hydrophobic silica having the surface treated with a CH₃ group was added in an amount of 0.5% by weight when preparing the dispersion solution.

### Example 2-3

An MEA was manufactured in the same manner as in Example 2-1, except that hydrophobic silica having the surface treated with a CH₃ group was added in an amount of 1.0% by weight when preparing the dispersion solution.

### [Experimental Example 1] Evaluation of Output Performance and Reverse-Voltage Resistance

For each of the membrane-electrode assemblies of the Examples and the Comparative Examples, a reverse-voltage generation test (cell reversal test) in a situation of fuel shortage of the fuel electrode was performed. As a specific test method, the temperature of the unit cell was maintained at 65°C first, and an evaluation was performed with a back pressure of 150 kPa applied while respectively plying hydrogen and air with relative humidity of 100% to an air electrode and a fuel electrode in amounts corresponding to stoichiometry 1.5/2.0. Current density of 1.0 A/cm² was applied to measure potential, which was kept for 10 minutes. After that, nitrogen was supplied to the fuel electrode, and potential was measured while applying a current of 0.2 A/cm², and cell reversal time (TCR) is shown in Tables 1 to 6. T_{CR}-2.0 V means the time taken to reach -2.0 V while applying a current of 0.2 A/cm², and longer T_{CR}-2.0 V may indicate higher durability.

**[Table 1]**

| | Third Catalyst Layer | | Second Catalyst Layer | | First Catalyst Layer | |
|---|---|---|---|---|---|---|
| Fuel Electro de Composi tion | Amount of Ir (mg/cm²) | Thickn ess (µm) | Amount of Pt (mg/cm²) | Thickn ess (µm) | Amount of Ir (mg/cm²) | Thickne ss (µm) |
| Compara tive Example 1 | 0 | 0 | 0.1 | 7.2 | 0 | 0 |
| Compara tive Example 2 | 0.01 | 1.6 | 0.1 | 7.1 | 0 | 0 |
| Compara tive Example 3 | 0 | 0 | 0.1 | 6.8 | 0.01 | 1.5 |

**[Table 2]**

| Fuel Electrode Composition | Output Voltage [V] (@ 1 A/cm²) | Cell Reversal Time (T_{CR} -2.0 V, min) |
|---|---|---|
| Comparative Example 1 | 0.651 | 2.2 |
| Comparative Example 2 | 0.629 | 121 |
| Comparative Example 3 | 0.652 | 99 |

Referring to Tables 1 and 2, it may be seen that Comparative Example 1 that does not include an OER catalyst has weak durability and has cell reversal time of about 2 minutes. However, Comparative Examples 2 and 3 including an OER catalyst have the same amount of OER catalyst used in the fuel electrode, but have a difference in the structural position, leading to a difference in durability. Comparative Example 2 shows excellent reverse-voltage resistance, but shows a decrease in the output voltage due to the resistance generated by the third catalyst layer when hydrogen ions produced in the fuel electrode are transferred toward the electrolyte membrane. On the contrary, when the first catalyst layer includes an OER catalyst, durability is lower than that of Comparative Example 2 due to relatively low water distribution caused by the distance that the moisture coming from the air electrode needs to move to reach the fuel electrode.

**[Table 3]**

| | Third Catalyst Layer | | | | Second Catalyst Layer | | First Catalyst Layer | |
|---|---|---|---|---|---|---|---|---|
| Fuel Electr ode Compos ition | Amount of Pt (mg/cm 2) | Absorb ent Silica (wt%) | Thic knes s (µm) | Contact Angle (degree ) | Amount of Pt (mg/cm 2) | Thic knes s (µm) | Amount of Ir (mg/cm 2) | Thic knes s (µm) |
| Compar ative Exampl e 1 | 0 | 0 | - | - | 0.1 | 7.2 | 0 | - |
| Exampl e 1-1 | 0.03 | 0.5 | 1.9 | 58 | 0.07 | 5.1 | 0.01 | 1.5 |
| Exampl e 1-2 | 0.03 | 1.5 | 2.2 | 49 | 0.07 | 4.9 | 0.01 | 1.3 |
| Exampl e 1-3 | 0.03 | 3.0 | 2.3 | 33 | 0.07 | 5.3 | 0.01 | 1.3 |

**[Table 4]**

| Fuel Electrode Composition | Output Voltage [V] (@ 1A/cm²) | Cell Reversal Time (T_{CR} -2.0 V, min) |
|---|---|---|
| Comparative Example 1 | 0.651 | 2.2 |
| Example 1-1 | 0.652 | 128 |
| Example 1-2 | 0.633 | 138 |
| Example 1-3 | 0.613 | 151 |

Referring to Tables 3 and 4, it may be seen that the amount water coming from the air electrode increases when the amount of absorbent silica included in the third catalyst layer increases, increasing the overall moisture distribution in the fuel electrode, and as a result, cell reversal resistance is improved, however, resistance to hydrogen ion transfer increases as silica increases in the third catalyst layer, reducing the output voltage.

**[Table 5]**

| | Third Catalyst Layer | | | Second Catalys t Layer | First Catalyst Layer | | |
|---|---|---|---|---|---|---|---|
| | Amoun t of Pt (mg/c m²) | Absor bent Silic a (wt%) | Contac t Angle (degre e) | Amount of Pt (mg/cm² ) | Amount of Ir (mg/cm² ) | Water-Repell ent Silica (wt%) | Conta ct Angle (degr ee) |
| Compara tive Example 1 | 0 | 0 | - | 0.1 | 0 | 0 | - |
| Example 2-1 | 0.03 | 0.5 | 58 | 0.07 | 0.01 | 0.1 | 72 |
| Example 2-2 | 0.03 | 0.5 | 53 | 0.07 | 0.01 | 0.5 | 93 |
| Example 2-3 | 0.03 | 0.5 | 55 | 0.07 | 0.01 | 1.0 | 109 |

**[Table 6]**

| Fuel Electrode Composition | Output Voltage [V] (@ 1 A/cm²) | Cell Reversal Time (T_{CR} - 2.0 V, min) |
|---|---|---|
| Comparative Example 1 | 0.651 | 2.2 |
| Example 2-1 | 0.649 | 146 |
| Example 2-2 | 0.633 | 183 |
| Example 2-3 | 0.618 | 205 |

Referring to Tables 5 and 6, it may be identified that, when water-repellent silica is added to the first catalyst layer while including appropriate absorbent silica in the third catalyst layer, vapor is induced toward the gas diffusion layer, allowing smooth vapor supply to the first catalyst layer, and cell reversal resistance is significantly improved as the water repellency is stronger. However, as in the previous experiments, resistance occurs in the transfer of electrons, which are generated by hydrogen oxidation, to the gas diffusion layer as the silica content increases, reducing the output voltage.

Hereinbefore, preferred embodiments of the present disclosure have been described in detail, however, the embodiments are provided as a specific one example of the present disclosure, and the present disclosure is not limited thereby. The scope of the present disclosure includes various modified and improved forms made by those skilled in the art using the basic concept of the present disclosure defined in the claims to be described later.

### [Reference Numeral]

- 100:: Membrane-electrode assembly
- 10:: Gas diffusion layer 20: Electrode
- 21:: First catalyst layer 22: Second catalyst layer
- 23:: Third catalyst layer
- 30:: Polymer electrolyte membrane
- 200:: Fuel cell
- 210:: Fuel supply unit 220: Reformer
- 230:: Stack 231: First supply pipe
- 232:: Second supply pipe 233: First discharge pipe
- 234:: Second discharge pipe 240: Oxidizing agent supply unit

## Claims

1. An electrode for a fuel cell, the electrode comprising:
a first catalyst layer containing a water electrolysis catalyst;
a second catalyst layer provided on the first catalyst layer; and
a third catalyst layer provided on the second catalyst layer and having absorbency.

2. The electrode of claim 1, wherein the water electrolysis catalyst includes at least one type of oxygen evolution reaction catalyst selected from the group consisting of metals selected from the group consisting of Li, Co, Ni, Zn, Fe, Ti, Na, Mn, Cu, Ga, Sn, Cr, W, Ru, Ir, Pt, Au and alloys thereof, oxides of the metals, sulfides of the metals, and carbides of the metals.

3. The electrode of claim 2, wherein the oxygen evolution reaction catalyst includes at least one type selected from the group consisting of IrO₂, RuO₂, TiO₂, IrₓSn₁₋ₓO₂ (herein, x is a number greater than 0 and less than 1), PtIr, and IrRu.

4. The electrode of claim 1, wherein the first catalyst layer further contains a water-repellent material.

5. The electrode of claim 4, wherein the water-repellent material includes at least one type selected from the group consisting of a water-repellent resin, graphitized carbon, hydrophobicity-treated carbon, and hydrophobic silica.

6. The electrode of claim 4, wherein the water-repellent material includes hydrophobic silica having the surface treated with at least one type selected from the group consisting of methyl, difluoromethyl, ethyl, fluoroethyl, propyl, isopropyl, and 3-fluoropropyl.

7. The electrode of claim 4, wherein a content of the water-repellent material is 0.05% by weight or greater and 3% by weight or less based on a total weight of the first catalyst layer.

8. The electrode of claim 4, wherein the first catalyst layer has a surface contact angle of 70° or greater and 160° or less, and the third catalyst layer has a surface contact angle of 20° or greater and 60° or less.

9. The electrode of claim 1, wherein the first catalyst layer includes a first catalyst and a first ion-conducting polymer, the second catalyst layer includes a second catalyst and a second ion-conducting polymer, the third catalyst layer includes a third catalyst and a third ion-conducting polymer,
the first catalyst, the second catalyst and the third catalyst are the same as or different from each other, and
the first ion-conducting polymer, the second ion-conducting polymer and the third ion-conducting polymer are the same as or different from each other.

10. The electrode of claim 9, wherein the first catalyst, the second catalyst and the third catalyst each independently include a platinum-based catalyst.

11. The electrode of claim 1, wherein the second catalyst layer has a larger thickness than the first catalyst layer and the third catalyst layer.

12. The electrode of claim 11, wherein the second catalyst layer has a thickness of 5 µm or greater and 20 µm or less.

13. The electrode of claim 1, wherein the third catalyst layer further contains an absorbent material.

14. The electrode of claim 13, wherein the absorbent material includes at least one type selected from the group consisting of a hydrophilic resin, carbon having a hydrophilicity-treated surface, silica having a hydrophilicity-treated surface, carbon having a large surface area, and absorbent silica having a large surface area.

15. The electrode of claim 13, wherein a content of the absorbent material is 0.05% by weight or greater and 5% by weight or less based on a total weight of the third catalyst layer.

16. The electrode of claim 1, which is used as a fuel electrode of a fuel cell.

17. A method for manufacturing a membrane-electrode assembly including the electrode of claim 1, the method comprising:
forming a second catalyst layer on a substrate;
forming a third catalyst layer on the second catalyst layer;
bonding the third catalyst layer to a polymer electrolyte membrane;
removing the substrate;
forming a first catalyst layer on the second catalyst layer; and
bonding the first catalyst layer to a gas diffusion layer.

18. A membrane-electrode assembly comprising:
a polymer electrolyte membrane;
a fuel electrode provided on one surface of the polymer electrolyte membrane;
an air electrode provided on the other surface of the polymer electrolyte membrane; and
a gas diffusion layer provided on the fuel electrode and the air electrode,
wherein the fuel electrode is the electrode of claim 1,
the first catalyst layer of the fuel electrode is adjacent to the gas diffusion layer, and
the third catalyst layer is adjacent to the polymer electrolyte membrane.

19. A fuel cell comprising the membrane-electrode assembly of claim 18.
